# EUROPEAN PATENT SPECIFICATION

(11) **EP 3 929 041 B1**
(45) Date of publication and mention of the grant of the patent: **03.04.2024**
(21) Application number: 20760119.6
(22) Date of filing: 20.01.2020
(51) Int. Cl.: B60S 1/60, G01S 17/93, G01S 7/497, B60Q 1/00

(54) **DIRT DETECTION SYSTEM AND VEHICLE**
SCHMUTZERKENNUNGSSYSTEM FAHRZEUG
SYSTÈME DE DÉTECTION DE SALETÉ ET VÉHICULE

(30) Priority: 18.02.2019 JP 2019026549; 18.02.2019 JP 2019026550
(43) Date of publication of application: 29.12.2021
(73) Proprietor: KOITO MANUFACTURING CO., LTD., Minato-ku Tokyo 108-8711 (JP)
(72) Inventor: ONODA Yukihiro, Shizuoka-shi, Shizuoka 424-8764 (JP)
(74) Representative: Gill Jennings & Every LLP
(86) International application number: PCT/JP2020/001745
(87) International publication number: WO 2020/170680

(56) References cited:
- WO-A2-2017/184336
- DE-A1-102005 055 087
- JP-A- 2001 211 449
- JP-A- 2002 542 094
- JP-A- 2007 055 562
- JP-A- 2007 055 562
- JP-A- 2016 187 990
- JP-A- 2018 049 014
- JP-A- 2018 129 259

## Description

### TECHNICAL FIELD

The present disclosure relates to a dirt detection system, a LiDAR unit, a sensing system for a vehicle, and a vehicle. In particular, the present disclosure relates to a dirt detection system and a sensing system for a vehicle for detecting dirt on an outer cover of a vehicle lamp provided in a vehicle.

### BACKGROUND ART

Currently, research on automatic driving techniques of automobiles has been actively conducted in various countries, and each country considers legislation to allow a vehicle (hereinafter, the "vehicle" refers to an "automobile") to travel on public roads in an automatic driving mode. Here, in the automatic driving mode, a vehicle system automatically controls traveling of the vehicle. Specifically, in the automatic driving mode, the vehicle system automatically performs at least one of steering control (control on an advancing direction of the vehicle), brake control, and accelerator control (control on braking, and acceleration or deceleration of the vehicle) based on information indicating a surrounding environment of the vehicle (surrounding environment information) acquired from a sensor such as a camera or a radar (for example, a laser radar or a millimeter wave radar). On the other hand, in a manual driving mode to be described below, a driver controls traveling of the vehicle, as is often the case of many related-art vehicles. Specifically, in the manual driving mode, the traveling of the vehicle is controlled according to an operation (a steering operation, a brake operation, and an accelerator operation) of the driver, and the vehicle system does not automatically perform the steering control, the brake control, and the accelerator control. A vehicle driving mode is not a concept that exists only in a part of vehicles, but a concept that exists in all vehicles including the related-art vehicles that do not have an automatic driving function, and the vehicle driving mode is classified according to, for example, a vehicle control method.

Therefore, it is expected that a vehicle traveling in the automatic driving mode (hereinafter, appropriately referred to as "automatic driving vehicle") and a vehicle that travels in the manual driving mode (hereinafter, appropriately referred to as "manual driving vehicle") coexist on the public road in the future.

As an example of the automatic driving technique, JP H09-277887 A discloses an automatic following travel system for a following vehicle to automatically follow a preceding vehicle. In the automatic following travel system, each of the preceding vehicle and the following vehicle includes an illumination system. Character information for preventing other vehicles from cutting in between the preceding vehicle and the following vehicle is displayed on the illumination system of the preceding vehicle, and character information indicating that the following vehicle automatically follows the preceding vehicle is displayed on the illumination system of the following vehicle.

DE 102005055087A1 discloses a device for detecting a deviation of a vehicle from a target lane, including at least one electronic evaluation device for evaluating camera images and for detecting the deviation of the vehicle from the target lane. The electronic device also has a rain detection device which also evaluates the camera signals and includes image recognition software for detecting raindrops on transparent covers of the vehicle's headlight modules. Alternatively, of additionally, other contaminants on the transparent covers can also be detected by the rain detection device.

### SUMMARY OF INVENTION

In the development of the automatic driving technique, it is necessary to dramatically increase detection accuracy of a surrounding environment of the vehicle. In this regard, mounting a plurality of different types of sensors (for example, a camera, a LiDAR unit, a millimeter wave radar, and the like) on a vehicle is currently being considered. For example, it is considered to provide a plurality of sensors at each of four corners of the vehicle. Specifically, it is considered to mount a LiDAR unit, a camera, and a millimeter wave radar on each of four vehicle lamps provided at the four corners of the vehicle.

The LiDAR unit disposed in the vehicle lamp acquires point group data indicating the surrounding environment of the vehicle through a transparent outer cover. Similarly, the camera provided in the vehicle lamp acquires image data indicating the surrounding environment of the vehicle through the transparent outer cover. Therefore, when dirt adheres to the outer cover of the vehicle lamp, there is a risk that the surrounding environment of the vehicle cannot be accurately specified based on the point group data of the LiDAR unit and/or the image data of the camera due to the dirt (mud, dust, or the like) adhering to the outer cover. As described above, when a sensor such as the LiDAR unit or the camera is provided in the vehicle lamp, it is necessary to consider a method for detecting dirt that adheres to the outer cover and adversely affects the detection accuracy of the sensor.

An object of the present disclosure is to provide a system capable of suppressing a decrease in detection accuracy of a sensor disposed in a vehicle lamp.

According to the invention, as defined by claim 1, there is provided a dirt detection system configured to detect dirt adhering to an outer cover of a vehicle lamp. A sensor that detects a surrounding environment of a vehicle is mounted on the vehicle lamp. The dirt detection system includes: a thermal imaging camera configured to acquire thermal image data indicating the outer cover; a lamp cleaner configured to remove dirt adhering to the outer cover; and a lamp cleaner control unit configured to determine based on the thermal image data whether there is dirt adhering to the outer cover, and to drive the lamp cleaner in response to a determination that there is dirt adhering to the outer cover.

According to the above configuration, it is determined based on the thermal image data whether there is dirt adhering to the outer cover, and further the lamp cleaner is driven in response to the determination that there is dirt adhering to the outer cover. In this way, dirt adhering to the outer cover can be detected based on the thermal image data acquired from the thermal imaging camera. In this regard, since dirt such as mud absorbs light emitted from an illumination unit or light emitted from a LiDAR unit, a temperature of the dirt is higher than a temperature of the outer cover. Therefore, it is possible to detect dirt adhering to the outer cover based on the thermal image data.

Therefore, since it is possible to reliably detect dirt adhering to the outer cover, it is possible to suppress a decrease in detection accuracy of a sensor (in particular, a LiDAR unit, a camera, or the like) disposed in a space defined by the outer cover and a housing of the vehicle lamp.

The thermal imaging camera may be disposed in a space defined by a housing and the outer cover of the vehicle lamp.

According to the above configuration, since the thermal imaging camera is disposed in the space defined by the housing and the outer cover of the vehicle lamp, it is possible to reliably determine whether there is dirt adhering to the outer cover based on the thermal image data indicating the outer cover.

The lamp cleaner control unit, according to the invention, is configured to determine based on the thermal image data whether there is dirt adhering to the outer cover when there is no pedestrian present within a predetermined range from the vehicle.

According to the above configuration, since the above determination processing is executed when there is no pedestrian present within the predetermined range from the vehicle, it is possible to reliably prevent a situation where a pedestrian is indicated in the thermal image data. In this way, it is possible to reliably prevent a situation (that is, erroneous detection of dirt) where a pedestrian that radiates heat is determined as dirt adhering to the outer cover.

The lamp cleaner control unit may be configured to specify a high-temperature region having a temperature equal to or higher than a threshold temperature based on the thermal image data, determine whether the specified high-temperature region covers an area equal to or larger than a predetermined area, and determine that there is dirt adhering to the outer cover when the high-temperature region covers an area equal to or larger than the predetermined area.

According to the above configuration, it is possible to reliably determine whether there is dirt adhering to the outer cover based on the thermal image data indicating the outer cover.

The lamp cleaner control unit may be configured to determine the threshold temperature according to an outside air temperature outside the vehicle.

According to the above configuration, since the threshold temperature is determined according to the outside air temperature, it is possible to execute optimum dirt determination processing in accordance with the outside air temperature. That is, it is possible to reliably prevent a situation where dirt adhering to the outer cover is not detected in accordance with the outside air temperature.

A vehicle including the dirt detection system may be provided.

According to the above, it is possible to provide a vehicle capable of suppressing a decrease in detection accuracy of a sensor disposed in a vehicle lamp.

According to an unclaimed aspect of the present disclosure, there is provided a LiDAR unit that includes: a first light emitting unit configured to emit first laser light having a first peak wavelength; a first light receiving unit configured to receive reflected light of the first laser light and to photoelectrically convert the reflected light of the first laser light; a second light emitting unit configured to emit second laser light having a second peak wavelength different from the first peak wavelength; a second light receiving unit configured to receive reflected light of the second laser light and to photoelectrically convert the reflected light of the second laser light; a first generation unit configured to generate first point group data based on an emission time of the first laser light and a light reception time of the reflected light of the first laser light; and a second generation unit configured to generate second point group data based on an emission time of the second laser light and a light reception time of the reflected light of the second laser light. A detection wavelength range of the first light receiving unit and a detection wavelength range of the second light receiving unit do not overlap each other.

According to the above configuration, the LiDAR unit can generate the first point group data associated with the first laser light and the second point group data associated with the second laser light. In this way, it is possible to provide a LiDAR unit capable of acquiring two different sets of point group data. For example, it is possible to specify a surrounding environment of the vehicle, on which the LiDAR unit is mounted, by using one set of point group data (for example, the first point group data) of the two sets of point group data. Further, it is possible to specify information other than that of the surrounding environment of the vehicle (for example, information on dirt adhering to the outer cover) by using the other set of point group data (for example, the second point group data) of the two sets of point group data.

An emission intensity of the second laser light may be smaller than an emission intensity of the first laser light.

According to the above configuration, since the emission intensity of the second laser light is smaller than the emission intensity of the first laser light, it is possible to make a surrounding environment indicated by the first point group data and a surrounding environment indicated by the second point group data different from each other. For example, it is possible to acquire information on dirt adhering to the outer cover by using the second point group data while acquiring surrounding environment information on an outside of the vehicle by using the first point group data.

According to another unclaimed aspect of the present disclosure, there is provided a sensing system for a vehicle configured to detect dirt adhering to an outer cover of a vehicle lamp provided in a vehicle. The sensing system for a vehicle includes: the LiDAR unit disposed in a space defined by a housing and the outer cover of the vehicle lamp, and configured to acquire first point group data and second point group data indicating a surrounding environment outside the vehicle; a lamp cleaner configured to remove dirt adhering to the outer cover; and a lamp cleaner control unit configured to determine whether there is dirt adhering to the outer cover based on the second point group data, and to drive the lamp cleaner in response to a determination that there is dirt adhering to the outer cover.

According to the above configuration, it is determined based on the second point group data whether there is dirt adhering to the outer cover, and further the lamp cleaner is driven in response to the determination that there is dirt adhering to the outer cover. Thus, it is possible to detect the dirt adhering to the outer cover based on the second point group data of one of the two sets of point group data acquired from the LiDAR unit. In this regard, when dirt such as rain, snow, or mud adheres to the outer cover, a point group indicating the dirt adhering to the outer cover appears in the second point group data, and thus it is possible to detect dirt adhering to the outer cover based on the point group. Accordingly, since it is possible to reliably detect the dirt adhering to the outer cover, it is possible to suppress a decrease in detection accuracy of a sensor such as the LiDAR unit disposed in the vehicle lamp.

The second point group data may indicate a surrounding environment within a predetermined distance from the LiDAR unit. When there is dirt adhering to the outer cover, the lamp cleaner control unit may determine, as dirt adhering to the outer cover, a point group indicated by the second point group data.

According to the above configuration, the point group indicated by the second point group data is determined as dirt adhering to the outer cover. In this way, since a point group indicating an object existing outside the vehicle does not appear in the second point group data, it is possible to determine whether there is dirt adhering to the outer cover based on presence or absence of a point group appearing in the second point group data.

The second point group data may indicate a surrounding environment outside the vehicle. When there is dirt adhering to the outer cover, the lamp cleaner control unit may determine, as dirt adhering to the outer cover, a point group that is indicated by the second point group data and that exists within a predetermined distance from the LiDAR unit.

According to the above configuration, the point group indicated by the second point group data and existing within the predetermined distance from the LiDAR unit is determined as dirt adhering to the outer cover. In this way, even when the second point group data indicates the surrounding environment outside the vehicle, it is possible to determine whether there is dirt adhering to the outer cover based on presence or absence of a point group indicated within the predetermined distance.

A vehicle including the sensing system for a vehicle is provided.

According to the above, it is possible to provide a vehicle capable of suppressing a decrease in detection accuracy of a sensor disposed in a vehicle lamp.

According to the present disclosure, it is possible to provide a system capable of suppressing a decrease in detection accuracy of a sensor disposed in a vehicle lamp.

### BRIEF DESCRIPTION OF DRAWINGS

Fig. 1 is a schematic diagram of a vehicle including a vehicle system according to a first embodiment of the present invention.
Fig. 2 is a block diagram illustrating the vehicle system according to the first embodiment.
Fig. 3A is a block diagram illustrating a left-front sensing system.
Fig. 3B is a block diagram illustrating a left-front dirt detection system.
Fig. 4 is a flowchart for illustrating a method of detecting dirt adhering to an outer cover.
Fig. 5 is a schematic diagram of a vehicle including a vehicle system according to a second embodiment.
Fig. 6 is a block diagram illustrating the vehicle system according to the second embodiment.
Fig. 7 is a block diagram illustrating a left-front sensing system.
Fig. 8 is a block diagram illustrating a configuration of a LiDAR unit according to the second embodiment.
Fig. 9 is a schematic diagram of the LiDAR unit according to the second embodiment.
Fig. 10 is a flowchart for illustrating a method of detecting dirt adhering to an outer cover according to the second embodiment.
Fig. 11 is a diagram illustrating first laser light and second laser light emitted from a LiDAR unit.

### DESCRIPTION OF EMBODIMENTS

### (First Embodiment)

Hereinafter, a first embodiment of the present disclosure forming part of the claimed invention (hereinafter, simply referred to as "the present embodiment") will be described with reference to the drawings. A description of members having the same reference numerals as members that have been described in the description of the present embodiment will be omitted for convenience of description. Dimensions of members shown in the drawings may be different from actual dimensions of the members for convenience of description.

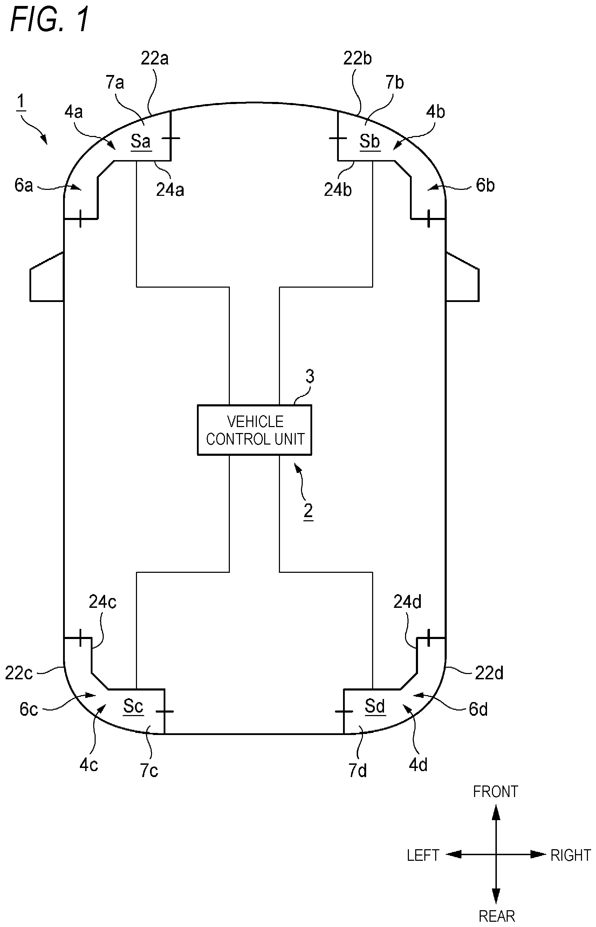

Further, in the description of the present embodiment, for convenience of description, a "left-right direction", a "front-rear direction", and an "up-down direction" may be referred to as appropriate. These directions are relative directions set for a vehicle 1 illustrated in Fig. 1. Here, the "front-rear direction" is a direction including a "front direction" and a "rear direction". The "left-right direction" is a direction including a "left direction" and a "right direction". The "up-down direction" is a direction including an "upward direction" and a "downward direction". Although the up-down direction is not shown in Fig. 1, the up-down direction is a direction perpendicular to the front-rear direction and the left-right direction.

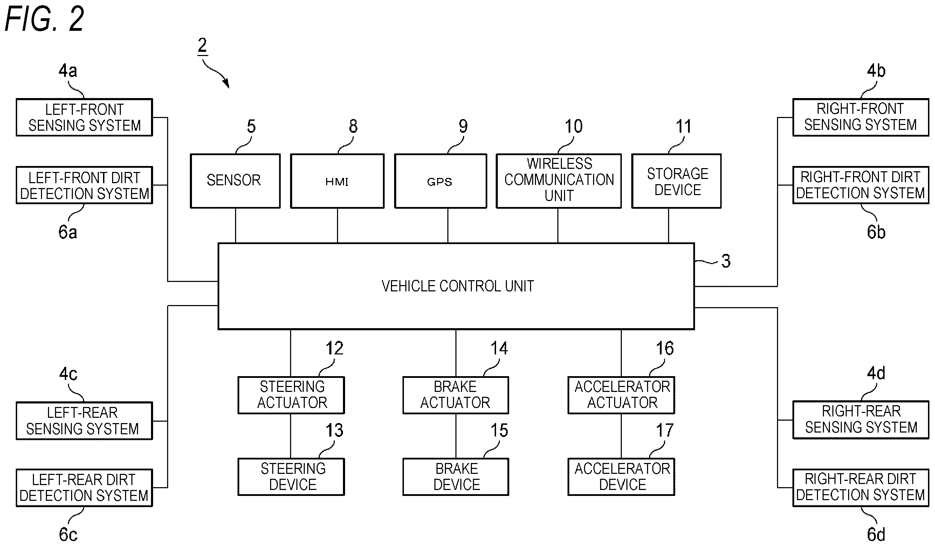

First, the vehicle 1 and a vehicle system 2 according to the present embodiment will be described with reference to Figs. 1 and 2. Fig. 1 is a schematic diagram illustrating a top view of the vehicle 1 that includes the vehicle system 2. Fig. 2 is a block diagram illustrating the vehicle system 2.

The vehicle 1 is a vehicle (automobile) that can travel in an automatic driving mode, and as illustrated in Fig. 1, includes the vehicle system 2, a left-front lamp 7a, a right-front lamp 7b, a left-rear lamp 7c, and a right-rear lamp 7d.

As illustrated in Figs. 1 and 2, the vehicle system 2 includes at least a vehicle control unit 3, a left-front sensing system 4a (hereinafter, simply referred to as a "sensing system 4a"), a right-front sensing system 4b (hereinafter, simply referred to as a "sensing system 4b"), a left-rear sensing system 4c (hereinafter, simply referred to as a "sensing system 4c"), and a right-rear sensing system 4d (hereinafter, simply referred to as a "sensing system 4d").

The vehicle system 2 further includes a left-front dirt detection system 6a (hereinafter, simply referred to as a "dirt detection system 6a"), a right-front dirt detection system 6b (hereinafter, simply referred to as a "dirt detection system 6b"), a left-rear dirt detection system 6c (hereinafter, simply referred to as a "dirt detection system 6c"), and a right-rear dirt detection system 6d (hereinafter, simply referred to as a "dirt detection system 6d").

The vehicle system 2 further includes a sensor 5, a human machine interface (HMI) 8, a global positioning system (GPS) 9, a wireless communication unit 10, and a storage device 11. In addition, the vehicle system 2 includes a steering actuator 12, a steering device 13, a brake actuator 14, a brake device 15, an accelerator actuator 16, and an accelerator device 17.

The vehicle control unit 3 is configured to control traveling of the vehicle 1. The vehicle control unit 3, for example, is configured with at least one electronic control unit (ECU). The electronic control unit includes a computer system (for example, a system on a chip (SoC)) including one or more processors and one or more memories; and an electronic circuit including an active element such as a transistor and a passive element. The processor includes, for example, at least one of a central processing unit (CPU), a micro processing unit (MPU), a graphics processing unit (GPU) and a tensor processing unit (TPU). The CPU may be configured with a plurality of CPU cores. The GPU may be configured with a plurality of GPU cores. The memory includes a read only memory (ROM) and a random access memory (RAM). The ROM may store a vehicle control program. For example, the vehicle control program may include an artificial intelligence (AI) program for automatic driving. The AI program is a program (a trained model) constructed by supervised or unsupervised machine learning (in particular, deep learning) using a multilayer neural network. The RAM may temporarily store a vehicle control program, vehicle control data, and/or surrounding environment information indicating a surrounding environment of the vehicle. The processor may be configured to load a program designated from various vehicle control programs stored in the ROM onto the RAM and execute various types of processing in cooperation with the RAM. Further, the computer system may be configured with a non-von Neumann computer such as an application specific integrated circuit (ASIC) or a field-programmable gate array (FPGA). Furthermore, the computer system may be configured with a combination of a Von Neumann computer and a non-Von Neumann computer.

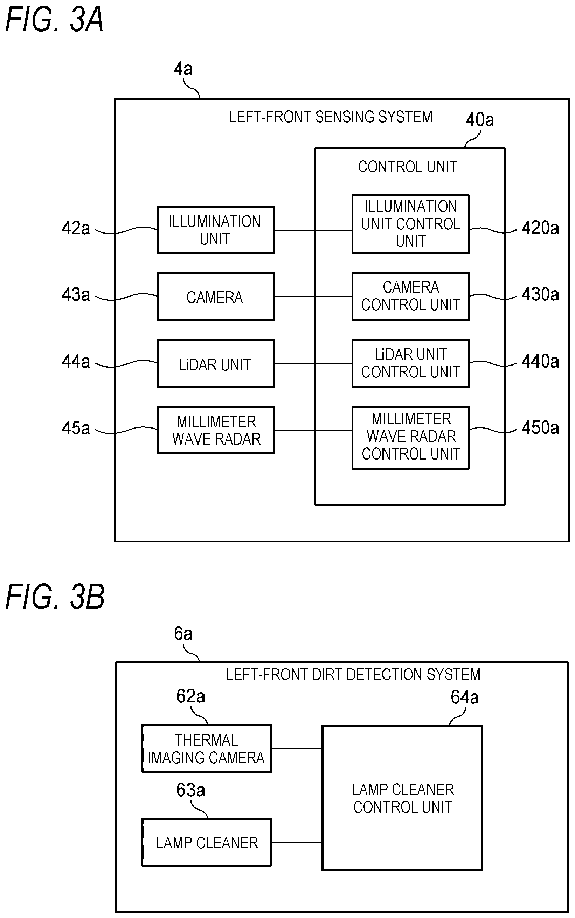

Each of the sensing systems 4a to 4d is configured to detect a surrounding environment of the vehicle 1. In the description of the present embodiment, it is assumed that the sensing systems 4a to 4d include the same components. Therefore, the sensing system 4a will be described below with reference to Fig. 3A. Fig. 3A is a block diagram illustrating the sensing system 4a.

As illustrated in Fig. 3A, the sensing system 4a includes a control unit 40a, an illumination unit 42a, a camera 43a, a light detection and ranging (LiDAR) unit 44a (an example of a laser radar), and a millimeter wave radar 45a. The control unit 40a, the illumination unit 42a, the camera 43a, the LiDAR unit 44a, and the millimeter wave radar 45a are provided in a space Sa defined by a housing 24a of the left-front lamp 7a and a translucent outer cover 22a that are illustrated in Fig. 1. Alternatively, the control unit 40a may be disposed at a predetermined portion of the vehicle 1 other than the space Sa. For example, the control unit 40a may be configured integrally with the vehicle control unit 3.

The control unit 40a is configured to control operations of the illumination unit 42a, the camera 43a, the LiDAR unit 44a, and the millimeter wave radar 45a. In this regard, the control unit 40a functions as an illumination unit control unit 420a, a camera control unit 430a, a LiDAR unit control unit 440a, and a millimeter wave radar control unit 450a. The control unit 40a is configured with at least one electronic control unit (ECU). The electronic control unit includes a computer system (for example, a SoC) including one or more processors and one or more memories, and an electronic circuit including an active element such as a transistor and a passive element. The processor includes at least one of a CPU, an MPU, a GPU and a TPU. The memory includes a ROM and a RAM. Further, the computer system may be configured with a non-von Neumann computer such as an ASIC or an FPGA.

The illumination unit 42a is configured to emit light toward an outside (a front side) of the vehicle 1 to form a light distribution pattern. The illumination unit 42a includes a light source that emits light and an optical system. The light source may be configured with, for example, a plurality of light emitting elements arranged in a matrix (for example, N rows × M columns, N > 1 and M > 1). The light emitting element is, for example, a light emitting diode (LED), a laser diode (LD), or an organic EL element. The optical system may include at least one of a reflector configured to reflect light emitted from the light source toward a front side of the illumination unit 42a, and a lens configured to refract light directly emitted from the light source or light reflected by the reflector.

The illumination unit control unit 420a is configured to control the illumination unit 42a such that the illumination unit 42a emits light of a predetermined light distribution pattern toward a front region of the vehicle 1. For example, the illumination unit control unit 420a may change the light distribution pattern of light emitted from the illumination unit 42a according to a driving mode of the vehicle 1.

The camera 43a is configured to detect a surrounding environment of the vehicle 1. In particular, the camera 43a is configured to acquire image data indicating the surrounding environment of the vehicle 1 and then transmit the image data to the camera control unit 430a. The camera control unit 430a may specify surrounding environment information based on the transmitted image data. Here, the surrounding environment information may include information on an object that exists outside the vehicle 1. For example, the surrounding environment information may include information on an attribute of the object existing outside the vehicle 1 and information on a distance, a direction and/or a position of the object with respect to the vehicle 1. The camera 43a includes, for example, an imaging element such as a charge-coupled device (CCD) or a complementary metal oxide semiconductor (CMOS). The camera 43a may be configured as a monocular camera or a stereo camera. When the camera 43a is a stereo camera, the control unit 40a can specify, by using the parallax, a distance between the vehicle 1 and an object (for example, a pedestrian) existing outside the vehicle 1 based on two or more pieces of image data acquired by the stereo camera.

The LiDAR unit 44a is configured to detect a surrounding environment of the vehicle 1. In particular, the LiDAR unit 44a is configured to acquire point group data indicating the surrounding environment of the vehicle 1 and then transmit the point group data to the LiDAR unit control unit 440a. The LiDAR unit control unit 440a may specify surrounding environment information based on the transmitted point group data.

More specifically, the LiDAR unit 44a acquires information on a time of flight (TOF) ΔT1 of laser light (light pulse) at each emission angle (a horizontal angle θ and a vertical angle ϕ) of the laser light. The LiDAR unit 44a can acquire information on a distance D between the LiDAR unit 44a and an object existing outside the vehicle 1 at each emission angle, based on the information on the time of flight ΔT1 at each emission angle.

The LiDAR unit 44a includes, for example, a light emitting unit configured to emit laser light, an optical deflector configured to perform scanning with the laser light in a horizontal direction and a vertical direction, an optical system such as a lens, and a light receiving unit configured to receive the laser light reflected by an object. A peak wavelength of the laser light emitted from the light emitting unit is not particularly limited. For example, the laser light may be invisible light (infrared light) having a peak wavelength of about 900 nm. The light emitting unit is, for example, a laser diode. The optical deflector is, for example, a micro electro mechanical systems (MEMS) mirror or a polygon mirror. The light receiving unit is, for example, a photodiode. The LiDAR unit 44a may acquire the point group data, without the optical deflector performing scanning with the laser light. For example, the LiDAR unit 44a may acquire the point group data by using a phased array method or a flash method. In addition, the LiDAR unit 44a may acquire the point group data by mechanically driving and rotating the light emitting unit and the light receiving unit.

The millimeter wave radar 45a is configured to detect radar data indicating a surrounding environment of the vehicle 1. In particular, the millimeter wave radar 45a is configured to acquire radar data and then transmit the radar data to the millimeter wave radar control unit 450a. The millimeter wave radar control unit 450a is configured to acquire surrounding environment information based on the radar data. The surrounding environment information may include information on an object existing outside the vehicle 1. For example, the surrounding environment information may include information on a position and a direction of the object with respect to the vehicle 1 and information on a relative speed of the object with respect to the vehicle 1.

For example, the millimeter wave radar 45a can acquire a distance between the millimeter wave radar 45a and the object existing outside the vehicle 1 and a direction using a pulse modulation method, a frequency modulated continuous wave (FM-CW) method, or a two-frequency CW method. When the pulse modulation method is used, the millimeter wave radar 45a can acquire information on a time of flight ΔT2 of a millimeter wave, and then acquire information on a distance D between the millimeter wave radar 45a and the object existing outside the vehicle 1 based on the information on the time of flight ΔT2. In addition, the millimeter wave radar 45a can acquire information on the direction of the object with respect to the vehicle 1 based on a phase difference between a phase of the millimeter wave (received wave) received by one reception antenna and a phase of the millimeter wave (received wave) received by another reception antenna adjacent to the one reception antenna. Further, the millimeter wave radar 45a can acquire information on a relative speed V of the object with respect to the millimeter wave radar 45a based on a frequency f0 of a transmitted wave emitted from a transmission antenna and a frequency f1 of a received wave received by a reception antenna.

Similarly, each of the sensing systems 4b to 4d includes a control unit, an illumination unit, a camera, a LiDAR unit, and a millimeter wave radar. In particular, these devices of the sensing system 4b are disposed in a space Sb defined by a housing 24b of the right-front lamp 7b and a translucent outer cover 22b that are illustrated in Fig. 1. These devices of the sensing system 4c are disposed in a space Sc defined by a housing 24c of the left-rear lamp 7c and a translucent outer cover 22c. These devices of the sensing system 4d are disposed in a space Sd defined by a housing 24d of the right-rear lamp 7d and a translucent outer cover 22d.

Next, the dirt detection systems 6a to 6d will be described. Each of the dirt detection systems 6a to 6d is configured to detect dirt (for example, mud and dust) adhering to the outer cover and remove the detected dirt. In this regard, the dirt detection system 6a is configured to detect dirt adhering to the outer cover 22a and remove the dirt. Similarly, the dirt detection system 6b is configured to detect dirt adhering to the outer cover 22b and remove the dirt. The dirt detection system 6c is configured to detect dirt adhering to the outer cover 22c and remove the dirt. The dirt detection system 6d is configured to detect dirt adhering to the outer cover 22d and remove the dirt.

It is assumed that the dirt detection systems 6a to 6d include the same components. Therefore, hereinafter, the dirt detection system 6a will be described with reference to Fig. 3B. Fig. 3B is a block diagram illustrating the dirt detection system 6a.

As illustrated in Fig. 3B, the dirt detection system 6a includes a thermal imaging camera 62a, a lamp cleaner 63a, and a lamp cleaner control unit 64a. The thermal imaging camera 62a is, for example, a thermo viewer, and is configured to acquire thermal image data. The thermal image data captured by the thermal imaging camera 62a makes it possible to visualize an object existing around the thermal imaging camera 62a that generates heat (in particular, an object that emits infrared rays). The thermal imaging camera 62a includes an imaging element having light receiving sensitivity to infrared rays (particularly, far infrared rays).

The thermal imaging camera 62a is disposed in the space Sa (see Fig. 1), and is configured to acquire thermal image data indicating the outer cover 22a. In particular, the thermal imaging camera 62a may be disposed in the vicinity of the LiDAR unit 44a disposed in the space Sa. Further, the thermal imaging camera 62a may be configured to image a region of the outer cover 22a through which the laser light emitted from the LiDAR unit 44a passes. In the present embodiment, the thermal imaging camera 62a is configured to detect dirt adhering to the outer cover 22a, and may be configured to detect an object existing around the vehicle 1 that radiates heat, such as a pedestrian. As described above, the vehicle control unit 3 may determine an attribute of an object existing around the vehicle 1 as a person based on the thermal image data transmitted from the thermal imaging camera 62a.

The lamp cleaner 63a is configured to remove dirt adhering to the outer cover 22a, and is disposed in the vicinity of the outer cover 22a. The lamp cleaner 63a may be configured to remove dirt adhering to the outer cover 22a by injecting a cleaning liquid or air toward the outer cover 22a.

The lamp cleaner control unit 64a is configured to control the thermal imaging camera 62a and the lamp cleaner 63a. The lamp cleaner control unit 64a is configured to receive thermal image data from the thermal imaging camera 62a, and determine whether there is dirt adhering to the outer cover 22a based on the received thermal image data. Further, the lamp cleaner control unit 64a is configured to drive the lamp cleaner 63a in response to a determination that there is dirt adhering to the outer cover 22a.

The lamp cleaner control unit 64a is configured with at least one electronic control unit (ECU). The electronic control unit includes a computer system (for example, a SoC) including one or more processors and one or more memories, and an electronic circuit including an active element such as a transistor and a passive element. The processor includes at least one of a CPU, an MPU, a GPU and a TPU. The memory includes a ROM and a RAM. Further, the computer system may be configured with a non-von Neumann computer such as an ASIC or an FPGA.

Returning to Fig. 2, the sensor 5 may include an acceleration sensor, a speed sensor, a gyro sensor, and the like. The sensor 5 is configured to detect a traveling state of the vehicle 1 and output traveling state information indicating the traveling state of the vehicle 1 to the vehicle control unit 3. The sensor 5 may include an outside air temperature sensor that detects a temperature of air outside the vehicle 1.

The HMI 8 includes an input unit that receives an input operation from a driver and an output unit that outputs traveling information and the like to the driver. The input unit includes a steering wheel, an accelerator pedal, a brake pedal, a driving mode switch for switching a driving mode of the vehicle 1, and the like. The output unit is a display (for example, a head up display (HUD)) that displays various types of traveling information. The GPS 9 is configured to acquire current location information of the vehicle 1 and output the acquired current location information to the vehicle control unit 3.

The wireless communication unit 10 is configured to receive information on other vehicles around the vehicle 1 from the other vehicles and transmit information on the vehicle 1 to the other vehicles (vehicle-to-vehicle communication). The wireless communication unit 10 is configured to receive infrastructure information from an infrastructure facility such as a traffic light or a sign lamp and transmit traveling information of the vehicle 1 to the infrastructure facility (road-to-vehicle communication). The wireless communication unit 10 is configured to receive information on a pedestrian from a portable electronic device (a smart phone, a tablet, a wearable device or the like) carried by the pedestrian and transmit the own vehicle traveling information of the vehicle 1 to the portable electronic device (pedestrian-vehicle communication). The vehicle 1 may directly communicate with the other vehicles, the infrastructure facility or the portable electronic device in an ad-hoc mode, or may perform communication via a communication network such as the Internet.

The storage device 11 is an external storage device such as a hard disk drive (HDD) or a solid state drive (SSD). The storage device 11 may store two-dimensional or three-dimensional map information and/or a vehicle control program. For example, the three-dimensional map information may be configured with 3D mapping data (point group data). The storage device 11 is configured to output the map information and the vehicle control program to the vehicle control unit 3 in response to a request from the vehicle control unit 3. The map information and the vehicle control program may be updated via the wireless communication unit 10 and the communication network.

When the vehicle 1 travels in the automatic driving mode, the vehicle control unit 3 automatically generates at least one of a steering control signal, an accelerator control signal, and a brake control signal based on the traveling state information, the surrounding environment information, the current location information, the map information, and the like. The steering actuator 12 is configured to receive the steering control signal from the vehicle control unit 3 and control the steering device 13 based on the received steering control signal. The brake actuator 14 is configured to receive the brake control signal from the vehicle control unit 3 and control the brake device 15 based on the received brake control signal. The accelerator actuator 16 is configured to receive the accelerator control signal from the vehicle control unit 3 and controls the accelerator device 17 based on the received accelerator control signal. In this way, the vehicle control unit 3 automatically controls traveling of the vehicle 1 based on the traveling state information, the surrounding environment information, the current location information, the map information, and the like. That is, in the automatic driving mode, the traveling of the vehicle 1 is automatically controlled by the vehicle system 2.

On the other hand, when the vehicle 1 travels in the manual driving mode, the vehicle control unit 3 generates the steering control signal, the accelerator control signal, and the brake control signal in accordance with a manual operation of the driver with respect to the accelerator pedal, the brake pedal, and the steering wheel. In this way, in the manual driving mode, since the steering control signal, the accelerator control signal and the brake control signal are generated by the manual operation of the driver, the traveling of the vehicle 1 is controlled by the driver.

Next, the driving mode of the vehicle 1 will be described. The driving mode includes an automatic driving mode and a manual driving mode. The automatic driving mode includes a fully automatic driving mode, an advanced driving support mode, and a driving support mode. In the fully automatic driving mode, the vehicle system 2 automatically performs all kinds of traveling control including steering control, brake control, and accelerator control, and the driver cannot drive the vehicle 1. In the advanced driving support mode, the vehicle system 2 automatically performs all kinds of traveling control including the steering control, the brake control, and the accelerator control, and the driver can drive the vehicle 1 but does not drive the vehicle 1. In the driving support mode, the vehicle system 2 automatically performs a part of traveling control including the steering control, the brake control, and the accelerator control, and the driver drives the vehicle 1 under driving support of the vehicle system 2. On the other hand, in the manual driving mode, the vehicle system 2 does not automatically perform the traveling control, and the driver drives the vehicle 1 without the driving support of the vehicle system 2.

### (Description of Dirt Detection Method)

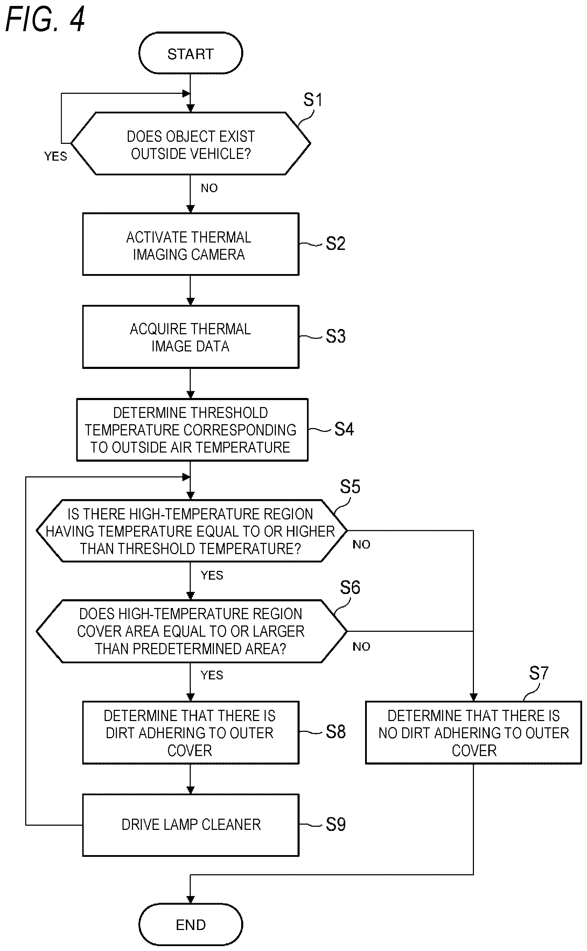

Next, a method of detecting dirt adhering to the outer cover 22a of the left-front lamp 7a will be described below with reference to Fig. 4. Fig. 4 is a flowchart for illustrating the method of detecting dirt adhering to the outer cover 22a (hereinafter, referred to as "dirt detection method"). Although only dirt detection processing executed by the dirt detection system 6a will be described in the present embodiment, it should be noted that dirt detection processing executed by the dirt detection systems 6b to 6d is the same as the dirt detection processing executed by the dirt detection system 6a.

As illustrated in Fig. 4, in step S1, the vehicle control unit 3 determines whether an object (in particular, a pedestrian) exists outside the vehicle 1 based on surrounding environment information transmitted by the sensing systems 4a to 4d. When a determination result of step S1 is YES, the present determination processing is repeatedly executed until the determination result of step S1 is NO. On the other hand, when the determination result of step S1 is NO, the processing proceeds to step S2.

Next, in step S2, the lamp cleaner control unit 64a activates the thermal imaging camera 62a. When the thermal imaging camera 62a is already activated, processing of steps S2 and S3 is skipped. Next, in step S3, the lamp cleaner control unit 64a acquires thermal image data indicating the outer cover 22a from the thermal imaging camera 62a. In particular, the thermal image data may indicate a region of the outer cover 22a through which the laser light emitted from the LiDAR unit 44a passes.

Next, in step S4, the lamp cleaner control unit 64a acquires, from the vehicle control unit 3, information on an outside air temperature of air outside the vehicle 1 acquired by an outside air temperature sensor. Thereafter, the lamp cleaner control unit 64a determines a threshold temperature corresponding to the outside air temperature. For example, when the outside air temperature is low, the threshold temperature may be set to a low temperature. Conversely, when the outside air temperature is high, the threshold temperature may be set to a high temperature.

Next, the lamp cleaner control unit 64a determines, based on the thermal image data, whether there is a high-temperature region having a temperature equal to or higher than the threshold temperature (step S5). Here, the thermal image data (thermography) indicates temperature distribution of a captured surrounding environment. Therefore, the lamp cleaner control unit 64a can detect, from the thermal image data, whether there is a high-temperature region having a temperature equal to or higher than the threshold temperature in the captured outer cover 22a. When a determination result of step S5 is YES, the processing proceeds to step S6. On the other hand, when the determination result of step S5 is NO, in step S7, the lamp cleaner control unit 64a determines that there is no dirt adhering to the outer cover 22a, and then ends the present processing.

Next, in step S6, the lamp cleaner control unit 64a determines whether the high-temperature region present in the thermal image data covers an area equal to or larger than a predetermined area. When a determination result of step S6 is YES, the lamp cleaner control unit 64a determines that there is dirt adhering to the outer cover 22a (step S8). On the other hand, when the determination result of step S6 is NO, the lamp cleaner control unit 64a determines that there is no dirt adhering to the outer cover 22a, and then ends the present processing. In step S6, it may be determined whether the high-temperature region is formed of an aggregate of pixels of a predetermined number or more.

Thereafter, in step S9, the lamp cleaner control unit 64a drives the lamp cleaner 63a in order to remove the dirt adhering to the outer cover 22a. Specifically, the lamp cleaner control unit 64a drives the lamp cleaner 63a such that a cleaning liquid or air is injected from the lamp cleaner 63a toward the outer cover 22a.

After the processing of step S9 is executed, the present processing returns to step S5. In this way, the processing from step S5 to step S9 is repeatedly executed until it is determined that there is no dirt adhering to the outer cover 22a. Note that the present processing may be terminated after the processing of step S9 is executed.

As described above, according to the present embodiment, it is determined based on the thermal image data whether there is dirt adhering to the outer cover 22a, and further the outer cover 22a is driven in response to the determination that there is dirt adhering to the outer cover 22a. In this way, dirt adhering to the outer cover 22a can be detected based on the thermal image data acquired from the thermal imaging camera 62a. In this regard, since dirt such as mud absorbs the light emitted from the illumination unit 42a or the laser light emitted from the LiDAR unit 44a, a surface temperature of the dirt is higher than a surface temperature of the outer cover 22a. Therefore, when there is dirt adhering to the outer cover 22a, the high-temperature region can be detected from the thermal image data. As described above, it is possible to detect the dirt adhering to the outer cover 22a based on the thermal image data.

Therefore, since it is possible to reliably detect the dirt adhering to the outer cover 22a, it is possible to suppress a decrease in detection accuracy of the LiDAR unit 44a and the camera 43a disposed in the space Sa defined by the outer cover 22a and the housing 24a.

In addition, in the present embodiment, since the determination processing of step S1 is executed, it is possible to reliably prevent a situation where a pedestrian or the like is indicated in the thermal image data. In this way, it is possible to reliably prevent a situation where a pedestrian or the like that radiates heat is determined as dirt adhering to the outer cover 22a (that is, erroneous detection of dirt).

Further, in the present embodiment, in the processing of step S4, since the threshold temperature is determined according to the outside air temperature of air outside the vehicle 1, it is possible to reliably prevent a situation where the dirt adhering to the outer cover 22a is not detected according to the outside air temperature.

### (Second Embodiment)

Hereinafter, a second embodiment of the present disclosure not forming part of the claimed invention (hereinafter, simply referred to as "the present embodiment") will be described. In the description of the present embodiment, a description of members having the same reference numerals as those of the members already described in the first embodiment will be omitted for convenience of description. Dimensions of members shown in the drawings may be different from actual dimensions of the members for convenience of description.

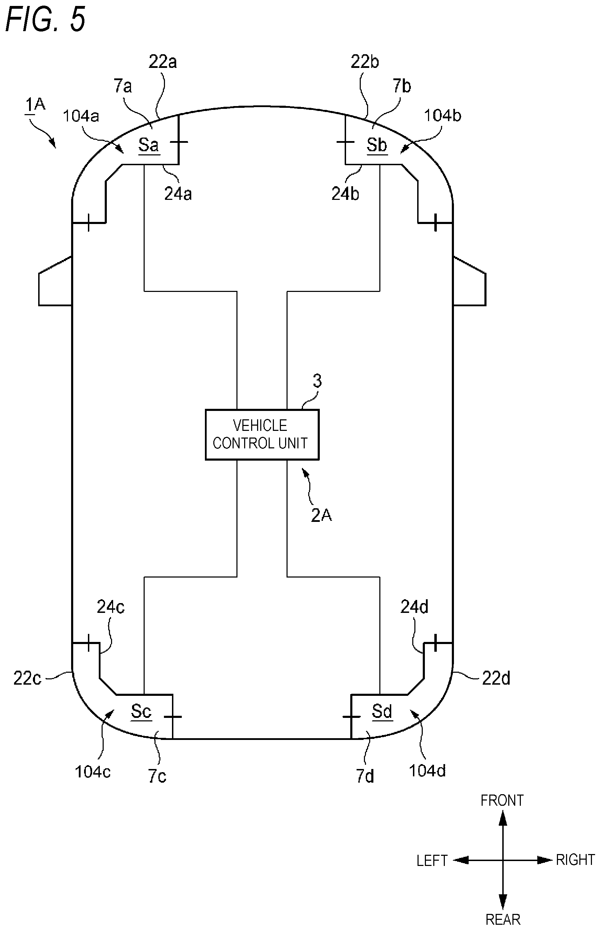

Further, in the description of the present embodiment, for convenience of description, a "left-right direction", a "front-rear direction", and an "up-down direction" may be referred to as appropriate. These directions are relative directions set for a vehicle 1A illustrated in Fig. 5. Here, the "front-rear direction" is a direction including a "front direction" and a "rear direction". The "left-right direction" is a direction including a "left direction" and a "right direction". The "up-down direction" is a direction including an "upward direction" and a "downward direction". Although the up-down direction is not shown in Fig. 5, the up-down direction is a direction perpendicular to the front-rear direction and the left-right direction.

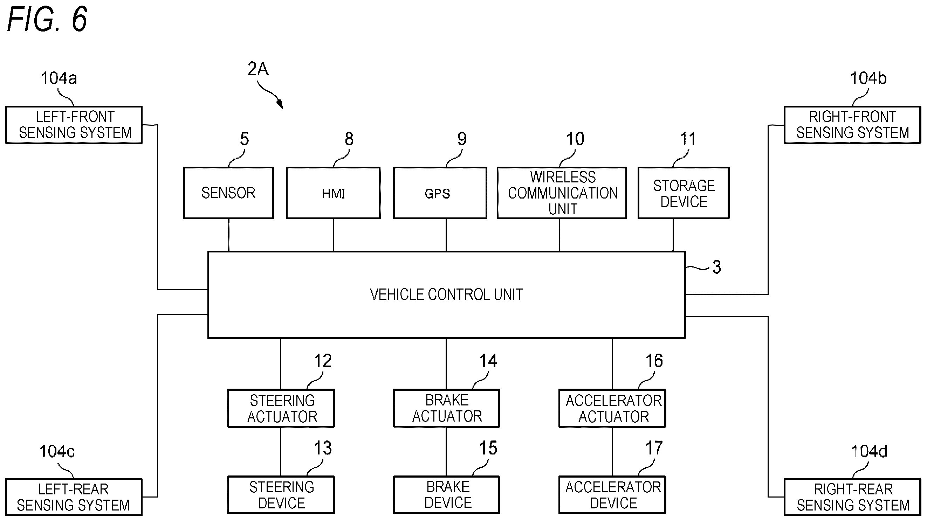

First, the vehicle 1A and a vehicle system 2A according to the present embodiment will be described with reference to Figs. 5 and 6. Fig. 5 is a schematic diagram illustrating a top view of the vehicle 1A that includes the vehicle system 2A. Fig. 6 is a block diagram illustrating the vehicle system 2A.

The vehicle 1A is a vehicle (automobile) that can travel in an automatic driving mode, and as illustrated in Fig. 5, includes the vehicle system 2A, the left-front lamp 7a, the right-front lamp 7b, the left-rear lamp 7c, and the right-rear lamp 7d.

As illustrated in Figs. 5 and 6, the vehicle system 2A includes at least the vehicle control unit 3, a left-front sensing system 104a (hereinafter, simply referred to as a "sensing system 104a"), a right-front sensing system 104b (hereinafter, simply referred to as a "sensing system 104b"), a left-rear sensing system 104c (hereinafter, simply referred to as a "sensing system 104c"), and a right-rear sensing system 104d (hereinafter, simply referred to as a "sensing system 104d").

The vehicle system 2A further includes the sensor 5, the HMI 8, the GPS 9, the wireless communication unit 10, and the storage device 11. In addition, the vehicle system 2A includes the steering actuator 12, the steering device 13, the brake actuator 14, the brake device 15, the accelerator actuator 16, and the accelerator device 17.

The vehicle control unit 3 is configured to control traveling of the vehicle 1A. The vehicle control unit 3, for example, is configured with at least one electronic control unit (ECU).

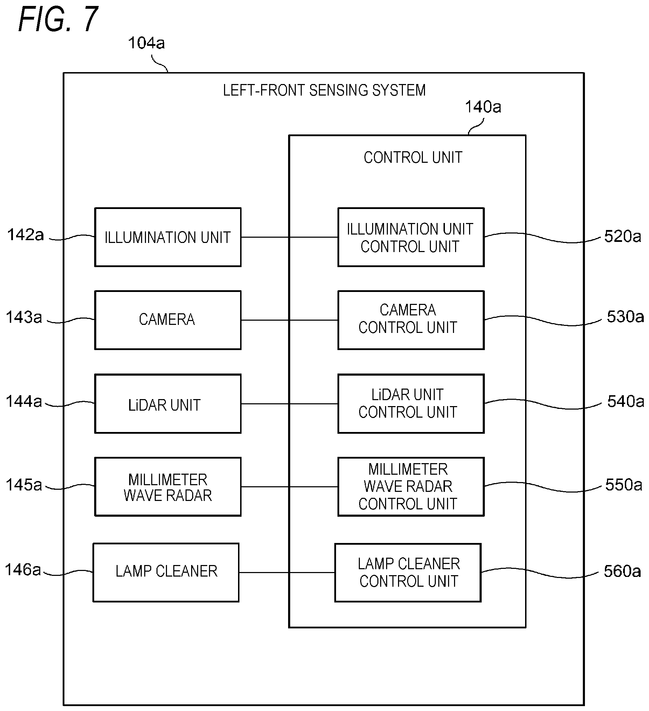

Each of the sensing systems 104a to 104d is configured to detect a surrounding environment of the vehicle 1A. In the description of the present embodiment, it is assumed that the sensing systems 104a to 104d include the same components. Therefore, the sensing system 104a will be described below with reference to Fig. 7. Fig. 7 is a block diagram illustrating the sensing system 104a.

As illustrated in Fig. 7, the sensing system 104a includes a control unit 140a, an illumination unit 142a, a camera 143a, a LiDAR unit 44a (an example of a laser radar), a millimeter wave radar 145a, and a lamp cleaner 146a. The control unit 140a, the illumination unit 142a, the camera 143a, the LiDAR unit 144a, and the millimeter wave radar 145a are provided in the space Sa defined by the housing 24a of the left-front lamp 7a and the translucent outer cover 22a that are illustrated in Fig. 5. Meanwhile, the lamp cleaner 146a is disposed outside the space Sa and in the vicinity of the left-front lamp 7a. Alternatively, the control unit 140a may be disposed at a predetermined portion of the vehicle 1A other than the space Sa. For example, the control unit 140a may be configured integrally with the vehicle control unit 3.

The control unit 140a is configured to control operations of the illumination unit 142a, the camera 143a, the LiDAR unit 144a, the millimeter wave radar 145a, and the lamp cleaner 146a. In this regard, the control unit 140a functions as an illumination unit control unit 520a, a camera control unit 530a, a LiDAR unit control unit 540a, a millimeter wave radar control unit 550a, and a lamp cleaner control unit 560a.

The control unit 140a is configured with at least one electronic control unit (ECU). The electronic control unit includes a computer system (for example, a SoC) including one or more processors and one or more memories, and an electronic circuit including an active element such as a transistor and a passive element. The processor includes at least one of a CPU, an MPU, a GPU and a TPU. The memory includes a ROM and a RAM. Further, the computer system may be configured with a non-von Neumann computer such as an ASIC or an FPGA.

The illumination unit 142a is configured to emit light toward an outside (a front side) of the vehicle 1A to form a light distribution pattern. The illumination unit 142a includes a light source that emits light and an optical system. The light source may be configured with, for example, a plurality of light emitting elements arranged in a matrix (for example, N rows × M columns, N > 1 and M > 1). The light emitting element is, for example, an LED, an LD, or an organic EL element. The optical system may include at least one of a reflector configured to reflect light emitted from the light source toward a front side of the illumination unit 142a, and a lens configured to refract light directly emitted from the light source or light reflected by the reflector.

The illumination unit control unit 520a is configured to control the illumination unit 142a such that the illumination unit 142a emits light of a predetermined light distribution pattern toward a front region of the vehicle 1A. For example, the illumination unit control unit 520a may change the light distribution pattern of light emitted from the illumination unit 142a according to a driving mode of the vehicle 1A.

The camera 143a is configured to detect a surrounding environment of the vehicle 1A. In particular, the camera 143a is configured to acquire image data indicating the surrounding environment of the vehicle 1A and then transmit the image data to the camera control unit 530a. The camera control unit 530a may specify surrounding environment information based on the transmitted image data. Here, the surrounding environment information may include information on an object that exists outside the vehicle 1A. For example, the surrounding environment information may include information on an attribute of the object existing outside the vehicle 1A and information on a distance, a direction and/or a position of the object with respect to the vehicle 1A. The camera 143a includes, for example, an imaging element such as a CCD or a CMOS (for example, complementary MOS). The camera 143a may be configured as a monocular camera or a stereo camera. When the camera 143a is a stereo camera, the control unit 140a can specify, by using the parallax, a distance between the vehicle 1A and an object (for example, a pedestrian) existing outside the vehicle 1A based on two or more pieces of image data acquired by the stereo camera.

The LiDAR unit 144a is configured to detect a surrounding environment of the vehicle 1A. In particular, the LiDAR unit 144a is configured to acquire point group data indicating the surrounding environment of the vehicle 1A and then transmit the point group data to the LiDAR unit control unit 540a. The LiDAR unit control unit 540a may specify the surrounding environment information based on the transmitted point group data.

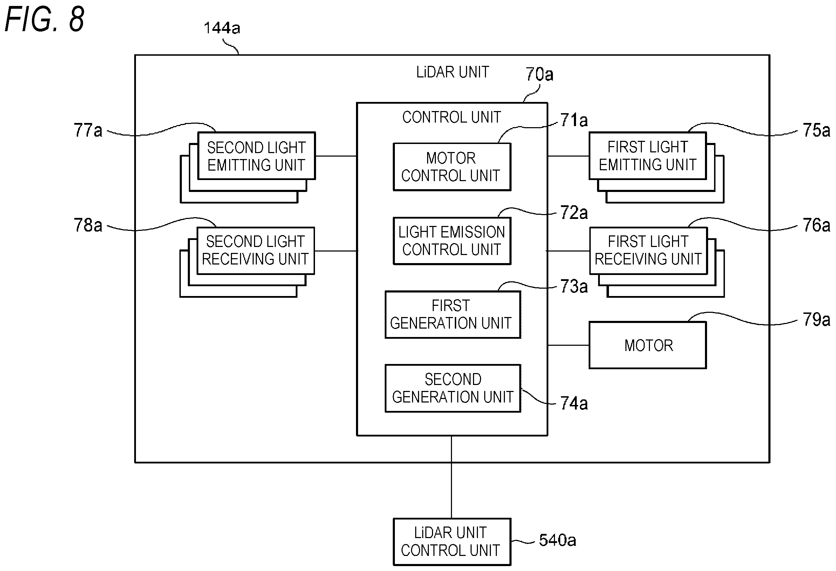

In this regard, a configuration of the LiDAR unit 144a according to the present embodiment will be described below with reference to Fig. 8. As illustrated in Fig. 8, the LiDAR unit 144a includes a plurality of first light emitting units 75a, a plurality of first light receiving units 76a, a plurality of second light emitting units 77a, a plurality of second light receiving units 78a, a motor 79a, and a control unit 70a.

Each of the plurality of first light emitting units 75a includes a light emitting element configured to emit first laser light having a first peak wavelength, and an optical member such as a lens. The first peak wavelength is, for example, 905 nm. The light emitting element is, for example, a laser diode that emits infrared laser light having a peak wavelength of 905 nm.

Each of the plurality of first light receiving units 76a includes a light receiving element configured to receive reflected light of the first laser light reflected by an object outside the vehicle 1A and to photoelectrically convert the reflected light of the first laser light, and an optical member such as a lens. The light receiving element is, for example, a Si photodiode having light receiving sensitivity with respect to light in a wavelength band of 300 nm to 1100 nm. Thus, a detection wavelength range of the first light receiving unit 76a is 300 nm to 1100 nm.

Each of the plurality of second light emitting units 77a includes a light emitting element configured to emit second laser light having a second peak wavelength, and an optical member such as a lens. The second peak wavelength is, for example, 1550 nm. The light emitting element is, for example, a laser diode that emits infrared laser light having a peak wavelength of 1550 nm.

Each of the plurality of second light receiving units 78a includes a light receiving element configured to receive reflected light of the second laser light reflected by dirt (for example, rain, snow, mud, and dust) formed on the outer cover 22a and to photoelectrically convert the reflected light of the second laser light, an optical member such as a lens, and a wavelength filter. The light receiving element is, for example, an InGaAs photodiode having light receiving sensitivity with respect to light in a wavelength band of 800 nm to 1700 nm. The wavelength filter is configured to block at least light in a wavelength band of 800 nm to 1200 nm. Thus, a detection wavelength range of the second light receiving unit 78a is 1200 nm to 1700 nm. Therefore, in the present embodiment, the detection wavelength range (300 nm to 1100 nm) of the first light receiving unit 76a and the detection wavelength range (1200 nm to 1700 nm) of the second light receiving unit 78a do not overlap each other.

In this way, the first light receiving unit 76a can detect the first laser light but cannot detect the second laser light. The second light receiving unit 78a can detect the second laser light but cannot detect the first laser light. Therefore, it is possible to prevent a situation where the first light receiving unit 76a or the second light receiving unit 78a detects both the first laser light and the second laser light.

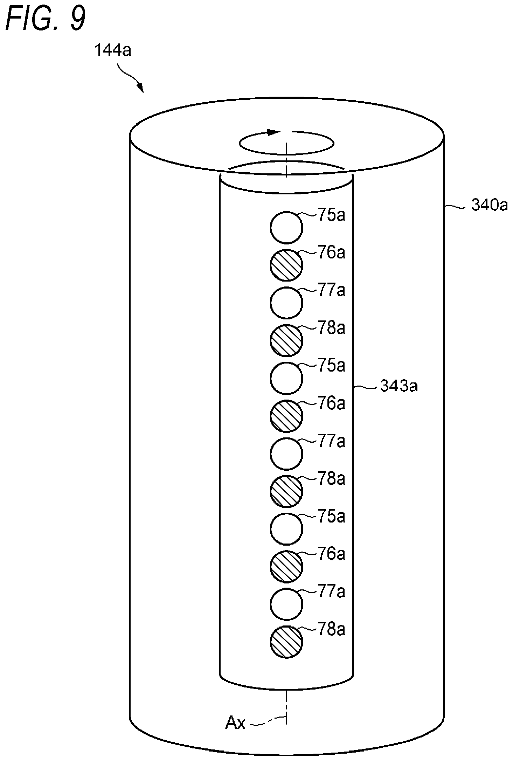

As illustrated in Fig. 9, the LiDAR unit 144a includes a housing 340a and a LiDAR unit main body 343a accommodated in the housing 340a. The plurality of the first light emitting units 75a, the first light receiving units 76a, the second light emitting units 77a, and the second light receiving units 78a are accommodated in the LiDAR unit main body 343a. For example, these light emitting units and the light receiving units may be arranged in a straight line along a rotation axis Ax. In Fig. 9, for convenience of illustration, three first and second light emitting units and first and second light receiving units are illustrated, and the number of light receiving units and light emitting units is not particularly limited. For example, the LiDAR unit 144a may include eight first and second light emitting units and eight first and second light receiving units.

In addition, the first light emitting units 75a may be configured to emit the first laser light (light pulse) at a same timing. Further, the first light emitting units 75a may be configured to emit the first laser light at different vertical angles ϕ in the vertical direction. In this case, an angular pitch Δϕ between the vertical angle ϕ of the first laser light emitted from one first light emitting unit 75a and the vertical angle ϕ of the first laser light emitted from another first light emitting unit 75a adjacent to the one first light emitting unit 75a may be set to a predetermined angle.

Further, the first light emitting units 75a are configured to emit the first laser light at a plurality of horizontal angles θ different in a horizontal direction. For example, an angular range in a water bubble direction may be 100°, and an angular pitch Δθ in the horizontal direction may be 0.2°. In this case, the first light emitting units 75a are configured to emit the first laser light at an angular pitch of 0.2° in the horizontal direction.

Similarly, the second light emitting units 77a may be configured to emit the second laser light (light pulse) at a same timing. Further, the second light emitting units 77a may be configured to emit the second laser light at different vertical angles ϕ in the vertical direction. In this case, the angular pitch Δϕ between the vertical angle ϕ of the second laser light emitted from one second light emitting unit 77a and the vertical angle ϕ of the second laser light emitted from another second light emitting unit 77a adjacent to the one second light emitting unit 77a may be set to a predetermined angle.

The second light emitting units 77a are configured to emit the second laser light at a plurality of horizontal angles θ different in the horizontal direction. For example, an angular range in the horizontal direction may be 100°, and the angular pitch Δθ in the horizontal direction may be 0.2°. In this case, the second light emitting units 77a are configured to emit the second laser light at an angular pitch of 0.2° in the horizontal direction.

The motor 79a is configured to rotationally drive the LiDAR unit main body 343a about the rotation axis Ax. By rotationally driving the LiDAR unit main body 343a, the first light emitting units 75a and the second light emitting units 77a can emit laser light at a plurality of horizontal angles θ different in the horizontal direction. For example, the angular range in the horizontal direction may be 100°, and the angular pitch Δθ in the horizontal direction may be 0.2°. In this case, the first light emitting units 75a can emit the first laser light at an angular pitch of 0.2° in the horizontal direction. Further, the second light emitting units 77a can emit the second laser light at an angular pitch of 0.2° in the horizontal direction.

The control unit 70a includes a motor control unit 71a, a light emission control unit 72a, a first generation unit 73a, and a second generation unit 74a. The control unit 70a is configured with at least one electronic control unit (ECU). The electronic control unit includes a computer system (for example, a SoC) including one or more processors and one or more memories, and an electronic circuit including an active element such as a transistor and a passive element. The processor includes at least one of a CPU, an MPU, a GPU and a TPU. The memory includes a ROM and a RAM. Further, the computer system may be configured with a non-von Neumann computer such as an ASIC or an FPGA.

The motor control unit 71a is configured to control driving of the motor 79a. The light emission control unit 72a is configured to control light emission of each of the plurality of first light emitting units 75a and the second light emitting units 77a.

The first generation unit 73a is configured to receive a signal corresponding to the reflected light of the first laser light that is output from the first light receiving unit 76a, and to specify a light reception time of the reflected light of the first laser light based on the received signal. In addition, the first generation unit 73a is configured to specify an emission time of the first laser light based on a signal output from the light emission control unit 72a.

In addition, the first generation unit 73a is configured to acquire information on a time of flight (TOF) ΔT1 that is a time difference between the emission time of the first laser light and the light reception time of the reflected light of the first laser light reflected by an object, at each emission angle (horizontal angle θ, vertical angle ϕ) of the first laser light. Further, the first generation unit 73a is configured to generate first point group data indicating a distance D between the LiDAR unit 144a and the object at each emission angle, based on information on the time of flight ΔT1 at each emission angle. The first generation unit 73a is configured to transmit the generated first point group data to the LiDAR unit control unit 540a.

The second generation unit 74a is configured to receive a signal corresponding to the reflected light of the second laser light that is output from the second light receiving unit 78a, and to specify a light reception time of the reflected light of the second laser light based on the received signal. In addition, the second generation unit 74a is configured to specify an emission time of the second laser light based on a signal output from the light emission control unit 72a.

In addition, the second generation unit 74a is configured to acquire information on a time of flight (TOF) ΔT2 that is a time difference between the emission time of the second laser light and the reception time of the reflected light of the second laser light reflected by an object, at each emission angle (horizontal angle θ, vertical angle ϕ) of the second laser light. Further, the second generation unit 74a is configured to generate second point group data indicating a distance D between the LiDAR unit 144a and the object at each emission angle, based on information on the time of flight ΔT2 at each emission angle. The second generation unit 74a is configured to transmit the generated second point group data to the LiDAR unit control unit 540a.

According to the present embodiment, the LiDAR unit 144a can generate the first point group data associated with the first laser light and the second point group data associated with the second laser light. Thus, it is possible to provide the LiDAR unit 144a capable of acquiring two different sets of point group data. In this regard, the surrounding environment information of the vehicle 1A can be acquired using the first point group data of the two sets of point group data. On the other hand, it is possible to acquire information (for example, information on dirt adhering to the outer cover 22a described later) other than the surrounding environment information of the vehicle 1A by using the second point group data of the two sets of point group data.

In the present embodiment, the LiDAR unit 144a acquires the first and second point group data by mechanically driving and rotating the light emitting unit and the light receiving unit, but the configuration of the LiDAR unit 144a is not limited thereto. For example, the LiDAR unit 144a may include an optical deflector with which scanning is performed with the first laser light and the second laser light in the horizontal direction and the vertical direction. The optical deflector is, for example, a micro electro mechanical systems (MEMS) mirror or a polygon mirror. Further, the LiDAR unit 144a may acquire the first and second point group data by using a phased array method or a flash method.

Next, returning to Fig. 7, the millimeter wave radar 145a and the lamp cleaner 146a will be described below. The millimeter wave radar 145a is configured to detect radar data indicating a surrounding environment of the vehicle 1A. In particular, the millimeter wave radar 145a is configured to acquire radar data and then transmit the radar data to the millimeter wave radar control unit 550a. The millimeter wave radar control unit 550a is configured to acquire surrounding environment information based on the radar data. The surrounding environment information may include information on an object existing outside the vehicle 1A. For example, the surrounding environment information may include information on a position and a direction of the object with respect to the vehicle 1A and information on a relative speed of the object with respect to the vehicle 1A.

For example, the millimeter wave radar 145a can acquire a distance between the millimeter wave radar 145a and the object existing outside the vehicle 1A and a direction using a pulse modulation method, a frequency modulated continuous wave (FM-CW) method, or a two-frequency CW method. When the pulse modulation method is used, the millimeter wave radar 145a can acquire information on the time of flight ΔT2 of a millimeter wave, and then acquire information on a distance D between the millimeter wave radar 145a and the object existing outside the vehicle 1A based on the information on the time of flight ΔT2. In addition, the millimeter wave radar 145a can acquire information on the direction of the object with respect to the vehicle 1A based on a phase difference between a phase of the millimeter wave (received wave) received by one reception antenna and a phase of the millimeter wave (received wave) received by another reception antenna adjacent to the one reception antenna. Further, the millimeter wave radar 145a can acquire information on a relative speed V of the object with respect to the millimeter wave radar 145a based on a frequency f0 of a transmitted wave emitted from a transmission antenna and a frequency f1 of a received wave received by a reception antenna.

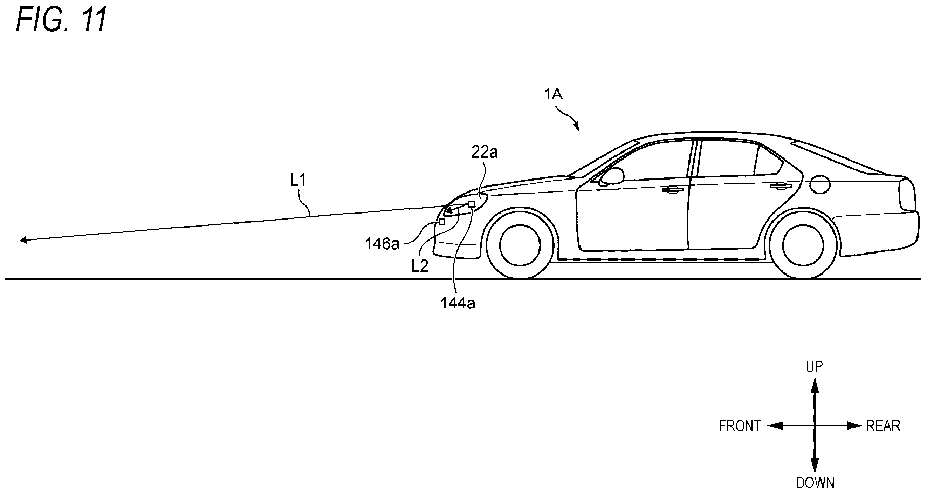

The lamp cleaner 146a is configured to remove dirt adhering to the outer cover 22a, and is disposed in the vicinity of the outer cover 22a (see Fig. 11). The lamp cleaner 146a may be configured to remove dirt adhering to the outer cover 22a by injecting a cleaning liquid or air toward the outer cover 22a.

The lamp cleaner control unit 560a is configured to control the lamp cleaner 146a. The lamp cleaner control unit 560a is configured to determine whether there is dirt (for example, rain, snow, mud and dust) adhering to the outer cover 22a based on the second point group data transmitted from the LiDAR unit control unit 540a. Further, the lamp cleaner control unit 560a is configured to drive the lamp cleaner 146a in response to a determination that there is dirt adhering to the outer cover 22a.

Similarly, each of the sensing systems 104b to 104d includes a control unit, an illumination unit, a camera, a LiDAR unit, a millimeter wave radar, and a lamp cleaner. In particular, these devices of the sensing system 104b are disposed in the space Sb defined by the housing 24b of the right-front lamp 7b and the translucent outer cover 22b that are illustrated in Fig. 5. These devices of the sensing system 104c are disposed in the space Sc defined by the housing 24c of the left-rear lamp 7c and the translucent outer cover 22c. These devices of the sensing system 104d are disposed in the space Sd defined by the housing 24d of the right-rear lamp 7d and the translucent outer cover 22d.

### (Dirt Detection Method According to Present Embodiment)

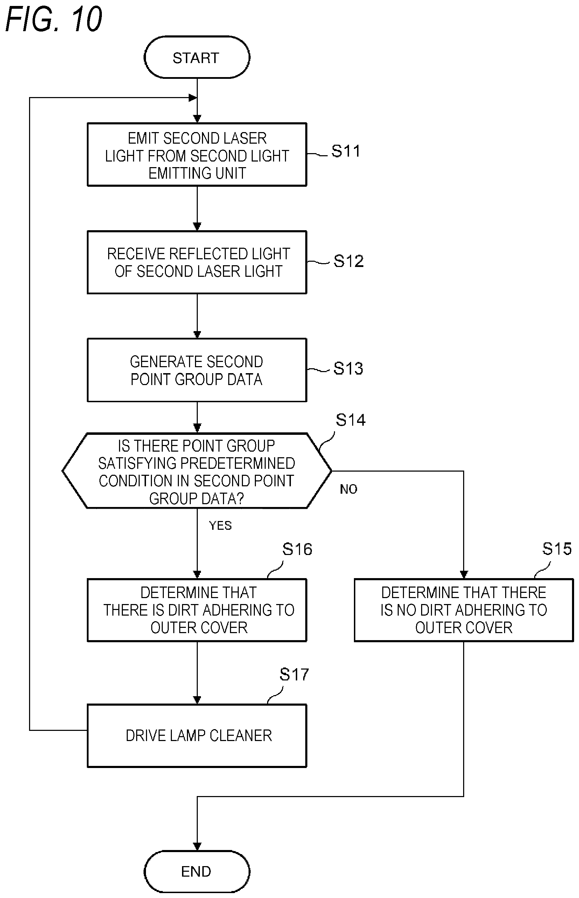

Next, a method of detecting dirt adhering to the outer cover 22a of the left-front lamp 7a will be described below mainly with reference to Fig. 10. Fig. 10 is a flowchart for illustrating the method of detecting dirt adhering to the outer cover 22a (hereinafter, referred to as "dirt detection method"). Although only dirt detection processing executed by the sensing system 6a will be described in the present embodiment, it should be noted that dirt detection processing executed by the sensing systems 6b to 6d is the same as the dirt detection processing executed by the sensing system 6a.

As illustrated in Fig. 10, in step S11, in accordance with an instruction from the lamp cleaner control unit 560a, the LiDAR unit control unit 540a controls the LiDAR unit 144a so that second laser light L2 is emitted to the outside from the plurality of second light emitting units 77a of the LiDAR unit 144a. Here, the LiDAR unit 144a emits the second laser light L2 at each emission angle (horizontal angle θ, vertical angle ϕ). Further, an emission intensity I2 of the second laser light L2 emitted from the second light emitting unit 77a is smaller than an emission intensity I1 of first laser light L1 emitted from the first light emitting unit 75a. In this regard, as illustrated in Fig. 11, the emission intensity I1 of the first laser light L1 is set to a magnitude at which reflected light of the first laser light L1 reflected by an object existing outside the vehicle 1A can be detected by the first light receiving unit 76a. In this regard, a maximum arrival distance of the first laser light L1 is within a range of several tens of meters to several hundreds of meters. On the other hand, the emission intensity I2 of the second laser light L2 is set such that a maximum arrival distance of the second laser light L2 is in the vicinity of the outer cover 22a. That is, at the emission intensity I2 of the second laser light L2, while reflected light of the second laser light L2 reflected by the object existing outside the vehicle 1A cannot be detected by the second light receiving unit 78a, reflected light of the second laser light L2 reflected by the outer cover 22a can be detected by the second light receiving unit 78a.

Next, in step S12, each of the plurality of second light receiving units 78a of the LiDAR unit 144a receives the reflected light of the second laser light L2 reflected by the outer cover 22a.

Next, in step S13, the second generation unit 74a acquires information on a time of flight ΔT2 that is a time difference between an emission time of the second laser light L2 and a reception time of the reflected light of the second laser light L2 reflected by the outer cover 22a, for each emission angle of the second laser light L2. Thereafter, the second generation unit 74a generates second point group data indicating the distance D between the LiDAR unit 144a and the outer cover 22a at each emission angle, based on the information on the time of flight ΔT2 at each emission angle. Thereafter, the generated second point group data is transmitted to the lamp cleaner control unit 560a via the LiDAR unit control unit 540a.

Next, in step S14, the lamp cleaner control unit 560a determines whether there is a point group satisfying a predetermined condition in the second point group data. In this regard, the predetermined condition is a condition associated with dirt adhering to the outer cover 22a. Here, when there is dirt such as mud adhering to the outer cover 22a, the reflected light of the second laser light L2 reflected by the dirt is detected by the second light receiving unit 78a. Therefore, in the second point group data, dirt adhering to the outer cover 22a is indicated as a point group. On the other hand, since the outer cover 22a is a translucent cover, when there is no dirt on the outer cover 22a, there is no point group including a predetermined number of points in the second point group data.

In this way, when there is dirt adhering to the outer cover 22a, a point group caused by the dirt is indicated in the second point group data. For example, when there is a point group including a predetermined number of points in the second point group data, it is determined that there is a point group associated with dirt in the second point group data.

When a determination result of step S14 is YES, the lamp cleaner control unit 560a determines that there is dirt adhering to the outer cover 22a (step S16). On the other hand, when the determination result of step S14 is NO, the lamp cleaner control unit 560a determines that there is no dirt adhering to the outer cover 22a (step S15).

Thereafter, in step S17, the lamp cleaner control unit 560a drives the lamp cleaner 146a in order to remove the dirt adhering to the outer cover 22a. Specifically, the lamp cleaner control unit 560a drives the lamp cleaner 146a such that a cleaning liquid or air is injected from the lamp cleaner 146a toward the outer cover 22a.

After the lamp cleaner 146a performs dirt removing processing on the outer cover 22a (after the processing of step S17 is performed), the present processing returns to step S11. In this way, the processing from step S11 to step S17 is repeatedly executed until it is determined that there is no dirt adhering to the outer cover 22a. The present processing may be terminated after the processing of step S17 is executed.

As described above, according to the present embodiment, it is determined based on the second point group data whether there is dirt adhering to the outer cover 22a, and further the lamp cleaner 146a is driven in response to the determination that there is dirt adhering to the outer cover 22a. Thus, it is possible to detect the dirt adhering to the outer cover 22a based on the second point group data of one of the two sets of point group data acquired from the LiDAR unit 144a. In this regard, when dirt such as rain, snow, dust, or mud adheres to the outer cover, a point group indicating the dirt adhering to the outer cover 22a appears in the second point group data, and thus it is possible to detect the dirt adhering to the outer cover 22a based on the point group. Accordingly, since the dirt adhering to the outer cover 22a can be detected with high accuracy, it is possible to suppress a decrease in detection accuracy of a sensor such as the LiDAR unit 144a disposed in the left-front lamp 7a.

In addition, according to the present embodiment, since the emission intensity I2 of the second laser light L2 is small, the second point group data indicates a surrounding environment within a predetermined distance from the LiDAR unit 144a. Specifically, the second point group data indicates the outer cover 22a that exists within the predetermined distance from the LiDAR unit 144a. In this way, since a point group indicating an object existing outside the vehicle 1A does not appear in the second point group data, it is possible to determine whether there is dirt adhering to the outer cover 22a based on presence or absence of a point group appearing in the second point group data.

In the present embodiment, the emission intensity I2 of the second laser light is set such that the maximum arrival distance of the second laser light L2 is in the vicinity of the outer cover 22a, but the present embodiment is not limited thereto. For example, the emission intensity I2 of the second laser light may be equal to or greater than the emission intensity I1 of the first laser light. In this case, similarly to the first point group data, an object outside the vehicle 1A is specified according to the second point group data. Alternatively, in the processing of step S14, the lamp cleaner control unit 560a may determine whether there is a point group, in the second point group data, satisfying a predetermined condition within a predetermined distance from the LiDAR unit 144a. Here, it is assumed that the outer cover 22a is disposed within the predetermined distance from the LiDAR unit 144a. When it is determined that there is a point group satisfying the predetermined condition within the predetermined distance from the LiDAR unit 144a, the lamp cleaner control unit 560a may determine that there is dirt adhering to the outer cover 22a. On the other hand, when it is determined that there is no point group satisfying the predetermined condition within the predetermined distance from the LiDAR unit 144a, the lamp cleaner control unit 560a may determine that there is no dirt adhering to the outer cover 22a. In this way, even when the second point group data indicates a surrounding environment outside the vehicle 1A, it is possible to determine whether there is dirt adhering to the outer cover 22a.

Although the embodiments of the present invention have been described, it is needless to say that the technical scope of the present invention should not be interpreted as being limited by the description of the present embodiments. It is to be understood by those skilled in the art that the present embodiments are merely examples and various modifications may be made within the scope of the invention described in the claims. The technical scope of the present invention should be determined based on the scope of the invention described in the claims.

## Claims

1. A dirt detection system (6a) for detecting dirt adhering to an outer cover (22a) of a vehicle lamp (7a) equipped with a sensor (4a) for detecting a surrounding environment of a vehicle (1), the dirt detection system (6a) comprising a lamp cleaner (63a) configured to remove dirt adhering to the outer cover (22a), **characterised in that** the dirt detection system (6a) further comprises:
a thermal imaging camera (62a) configured to acquire thermal image data indicating the outer cover (22a); and
a lamp cleaner control unit (64a) configured to determine based on the thermal image data whether there is dirt adhering to the outer cover (22a), and to drive the lamp cleaner (63a) in response to a determination that there is dirt adhering to the outer cover,
wherein the lamp cleaner control unit (64a) is configured to determine based on the thermal image data whether there is dirt adhering to the outer cover (22a) when there is no pedestrian present within a predetermined range from the vehicle (1).

2. The dirt detection system (6a) according to claim 1,
wherein the thermal imaging camera (62a) is disposed in a space (Sa) defined by a housing (24a) and the outer cover (22a) of the vehicle lamp (7a).

3. The dirt detection system (6a) according to claim 1 or claim 2,
wherein the lamp cleaner control unit (64a) is configured to
specify a high-temperature region having a temperature equal to or higher than a threshold temperature based on the thermal image data,
determine whether the specified high-temperature region covers an area equal to or larger than a predetermined area, and
determine that there is dirt adhering to the outer cover (22a) when the high-temperature region covers an area equal to or larger than the predetermined area.

4. The dirt detection system (6a) according to claim 3,
wherein the lamp cleaner control unit (64a) is configured to determine the threshold temperature according to an outside air temperature outside the vehicle (1).

5. A vehicle (1) comprising the dirt detection system (6a) according to any one of claims 1 to 4.

## Patentansprüche

1. Schmutzerkennungssystem (6a) zum Erkennen von Schmutz, der an einer äußeren Abdeckung (22a) einer mit einem Sensor (4a) zum Erkennen einer Umgebung eines Fahrzeugs (1) ausgestatteten Fahrzeugleuchte (7a) haftet, wobei das Schmutzerkennungssystem (6a) einen Leuchtenreiniger (63a) umfasst, der dazu konfiguriert ist, an der äußeren Abdeckung (22a) haftenden Schmutz zu entfernen, **dadurch gekennzeichnet, dass** das Schmutzerkennungssystem (6a) ferner Folgendes umfasst:
eine Wärmebildkamera (62a), die dazu konfiguriert ist, die äußere Abdeckung (22a) anzeigende Wärmebilddaten zu erfassen; und
eine Leuchtenreiniger-Steuereinheit (64a), die dazu konfiguriert ist, basierend auf den Wärmebilddaten zu bestimmen, ob Schmutz an der äußeren Abdeckung (22a) haftet und den Leuchtenreiniger (63a) als Reaktion auf eine Bestimmung, dass Schmutz an der äußeren Abdeckung haftet, anzusteuern,
wobei die Leuchtenreiniger-Steuereinheit (64a) dazu konfiguriert ist, basierend auf den Wärmebilddaten zu bestimmen, ob Schmutz an der äußeren Abdeckung (22a) haftet, wenn kein Fußgänger innerhalb einer vorgegebenen Entfernung von dem Fahrzeug (1) anwesend ist.

2. Schmutzerkennungssystem (6a) nach Anspruch 1,
wobei die Wärmebildkamera (62a) in einem Raum (Sa) angeordnet ist, der von einem Gehäuse (24a) und der äußeren Abdeckung (22a) der Fahrzeugleuchte (7a) definiert wird.

3. Schmutzerkennungssystem (6a) nach Anspruch 1 oder Anspruch 2,
wobei die Leuchtenreiniger-Steuereinheit (64a) dazu konfiguriert ist,
basierend auf den Wärmebilddaten einen Hochtemperaturbereich festzulegen, der eine Temperatur gleich oder höher als eine Schwellentemperatur aufweist,
zu bestimmen, ob der festgelegte Hochtemperaturbereich eine Fläche abdeckt, die größer oder gleich einer vorgegebenen Fläche ist, und
zu bestimmen, dass Schmutz an der äußern Abdeckung (22a) haftet, wenn der Hochtemperaturbereich eine Fläche abdeckt, die gleich oder größer als die vorgegebene Fläche ist.

4. Schmutzerkennungssystem (6a) nach Anspruch 3,
wobei die Leuchtenreiniger-Steuereinheit (64a) dazu konfiguriert ist, die Schwellentemperatur gemäß einer Außenlufttemperatur außerhalb des Fahrzeugs (1) zu bestimmen.

5. Fahrzeug (1), das das Schmutzerkennungssystem (6a) nach einem der Ansprüche 1 bis 4 umfasst.

## Revendications

1. Un système de détection de saletés (6a) qui est conçu pour détecter les saletés qui adhèrent à la surface extérieure (22a) d'un phare de véhicule (7a) et qui est équipé d'un capteur (4a) de détection de l'environnement immédiat d'un véhicule (1), et ce système de détection de saletés (6a) comporte un dispositif de nettoyage de phares (63a) configuré pour enlever les saletés qui adhèrent à la surface extérieure (22a), **se caractérisant par le fait que** ce système de détection de saletés (6a) comporte, en outre, les éléments suivants :
une caméra thermique (62a) configurée pour acquérir des données sous forme d'images thermiques qui montrent la surface extérieure (22a)
et
un bloc de commande du dispositif de nettoyage de phares (64a) configuré pour déterminer, en se basant sur les données se présentant sous la forme d'images thermiques, si des saletés adhèrent à la surface extérieure (22a) et pour activer le dispositif de nettoyage de phares (63a) en réponse à une détermination de la présence de saletés adhérant à la surface extérieure d'un phare, et le bloc de commande du dispositif de nettoyage de phares (64a) est configuré pour déterminer, en se basant sur les données se présentant sous la forme d'images thermiques, si des saletés adhèrent à la surface extérieure (22a) lorsqu'aucun piéton n'est présent dans un rayon d'action prédéterminé par rapport au véhicule (l).

2. Le système de détection de saletés (6a) que décrit la revendication l,
si ce n'est que la caméra thermique (62a) est implantée dans un espace (Sa) défini par un boîtier (24a) et la surface extérieure (22a) du phare du véhicule (7a).

3. Le système de détection de saletés (6a) que décrit la revendication l ou 2,
si ce n'est que le bloc de commande du dispositif de nettoyage de phares (64a) est configuré pour spécifier une région à température élevée qui a une température égale ou supérieure à un seuil de température basé sur les données se présentant sous la forme d'images thermiques, déterminer si la région spécifiée à température élevée couvre une superficie égale ou supérieure à une superficie prédéterminée et déterminer que des saletés adhèrent à la surface extérieure (22a) lorsque la région à température élevée couvre une superficie égale ou supérieure à la superficie prédéterminée.

4. Le système de détection de saletés (6a) que décrit la revendication 3,
si ce n'est que le bloc de commande du dispositif de nettoyage de phares (64a) est configuré pour déterminer le seuil de température en fonction de la température de l'air ambiant extérieur, à l'extérieur du véhicule (l).

5. Un véhicule (1) comportant le système de détection de saletés (6a) que décrit l'une ou l'autre des revendications 1 à 4.
